Europäisches Patentamt

European Patent Office

Office européen des brevets

(11) Veröffentlichungsnummer: **0 155 642**
A2

## (12) EUROPÄISCHE PATENTANMELDUNG

(21) Anmeldenummer: 85102950.4

(22) Anmeldetag: 14.03.85

(51) Int. Cl.⁴: **B 60 R 13/06**

(30) Priorität: 20.03.84 DE 3410193

(43) Veröffentlichungstag der Anmeldung:
25.09.85  Patentblatt  85/39

(84) Benannte Vertragsstaaten:
DE FR GB IT SE

(71) Anmelder: METZELER KAUTSCHUK GMBH
Gneisenaustrasse 15
D-8000 München 50(DE)

(72) Erfinder: Brocke, Rolf
Engetsweiler Strasse 37
D-7988 Neuravensburg(DE)

(74) Vertreter: Michelis, Theodor, Dipl.-Ing.
Gneisenaustrasse 15
D-8000 München 50(DE)

(54) Vorrichtung zum Abdichten des Fensterschachtes eine Kraftfahrzeuges.

(57) Eine Vorrichtung zum Abdichten des Fensterschachtes eines Kraftfahrzeugs weist ein U-förmiges Metallprofil, insbesondere ein Aluminium-Strangprofil, auf, in dem ein U-förmiges Klemmprofil und eine Dichtlippe aus elastomerem Material form- und/oder kraftschlüssig gehalten sind. Das Klemmprofil wird auf die Kante des entsprechenden Karosserieteils des Kraftfahrzeugs aufgeschoben, während die Dichtlippe an der Fensterscheibe des Kraftfahrzeugs anliegt.

./...

0155642

METZELER KAUTSCHUK GmbH          München, 12.3.1985
München                          Unser Zeichen: MK 335 P 84 EP


Vorrichtung zum Abdichten des Fensterschachtes
eines Kraftfahrzeuges

Die Erfindung betrifft eine Vorrichtung zum Abdichten des
Fensterschachtes eines Kraftfahrzeuges der im Oberbegriff
des Anspruchs 1 angegebenen Gattung.

Bei herkömmlichen Ausführungsformen einer solchen Abdichtvorrichtung wird der Befestigungsbereich im allgemeinen
durch Gummiprofile mit Metall-Einlagen gebildet, die
die erforderlichen Klemmkräfte liefern. Die Herstellung
solcher "armierter" Gummiprofile ist jedoch aufwendig.
Außerdem muß das sogenannte "Handling" solcher Abdichtvorrichtung mit einer gewissen Sorgfalt durchgeführt werden. Und schließlich treten bei armierten Gummiprofilen
starke Schwankungen in den Herstellungstoleranzen auf,
so daß der gleichmäßige Sitz im eingebauten Zustand nicht
gewährleistet ist.

Der Erfindung liegt deshalb die Aufgabe zugrunde, eine
Abdichtvorrichtung der angegebenen Gattung zu schaffen,
bei der die oben erwähnten Nachteile nicht auftreten.

Insbesondere soll eine Abdichtvorrichtung vorgeschlagen
werden, die ohne Probleme gefertigt und montiert werden
kann und im eingebauten Zustand einen gleichmäßigen Sitz
hat.

Dies wird erfindungsgemäß durch die im kennzeichnenden
Teil des Anspruchs 1 angegebenen Merkmale erreicht.

Zweckmäßige Ausführungsformen sind in den Unteransprüchen zusammengestellt.

Die mit der Erfindung erzielten Vorteile beruhen insbesondere darauf, daß der Festigkeitsträger des Befestigungsbereiches aus einem Metallstrangprofil, insbesondere einem Aluminium-Strangprofil, besteht, das ohne Probleme in den erforderlichen Stückzahlen hergestellt werden kann, indem die üblichen Metallprofile großer Länge in Stücke mit den erforderlichen Abmessungen zerschnitten werden. In diese U-förmigen Metallprofile werden sowohl die Dichtlippe als auch ein Klemmprofil aus elastomerem Material eingeschoben oder eingeknöpft, so daß sie dort kraft- und/oder formschlüssig gehalten sind.

Dadurch ergibt sich ein leichtes Handling einer solchen Abdichtvorrichtung, wobei im eingebauten Zustand der gleichmäßige Sitz gewährleistet ist. Auch die Fertigung bereitet keine Probleme, da die drei Einzelteile, nämlich das Aluminium-Strangprofil, das Klemmprofil und die Dichtlippe in kontinuierlichen Verfahren gefertigt und dann auf Stücke mit der gewünschten Länge zerschnitten werden. Der Zusammenbau dieser drei Einzelteile und die Montage der fertigen Abdichtvorrichtung auf den zugehörigen Karosserieteil des Kraftfahrzeugs bereitet keine Probleme.

Das Aluminium-Strangprofil kann sowohl in glänzender als auch in pulverisierter Ausführungsform eingesetzt werden. Die ausgeklinkten Stellen, beispielsweise für den Steg, sind im Vergleich mit den herkömmlichen, armierten Gummiprofilen noch sehr stabil. Und schließlich lassen sich sowohl das Klemmprofil als auch die Dichtlippe ohne Probleme auswechseln, so daß auch noch nachträgliche Reparaturen einer solchen Abdichtvorrichtung möglich sind.

Die Erfindung wird im folgenden anhand eines Ausführungsbeispiels unter Bezugnahme auf die beiliegende, schematische Zeichnung näher erläutert, die einen Schnitt durch eine solche Abdichtvorrichtung zeigt.

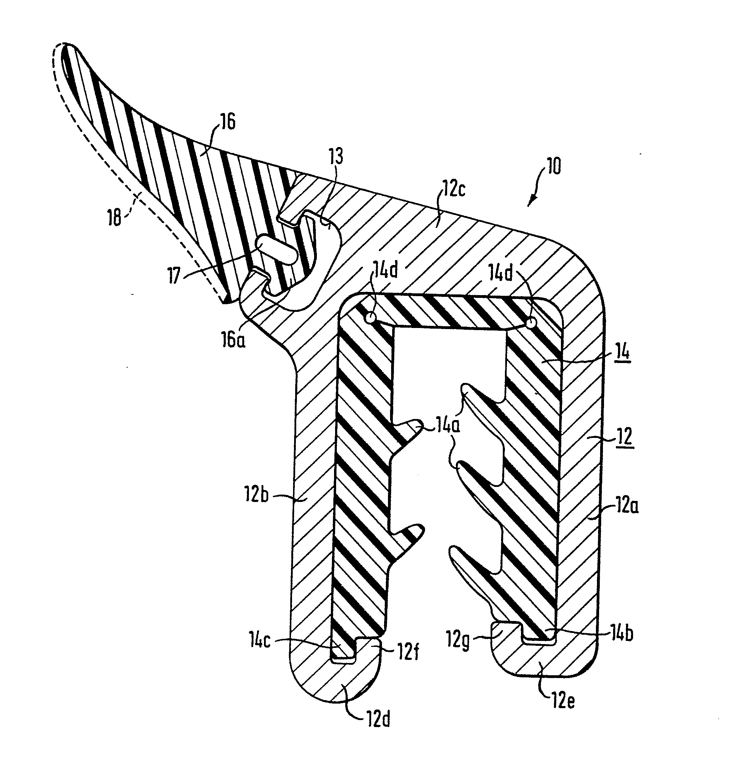

Die in der Zeichnung dargestellte, allgemein durch das Bezugszeichen 10 angedeutete Abdichtvorrichtung weist ein U-förmiges Aluminium-Strangprofil 12 mit zwei parallel zueinander verlaufenden Schenkeln 12a, 12b und mit einem Übergangsbereich 12c zwischen den beiden Schenkeln 12a, 12b auf. Die freien Enden der Schenkel 12a, 12b sind mit nach innen ragenden Schultern 12d, 12e versehen, die wiederum in Vorsprüngen 12f, 12g auslaufen. Die Vorsprünge 12f, 12g sind zum Übergangsbereich 12c hin gewandt und bilden mit den Schultern 12d, 12e und den Enden der Schenkel 12a, 12b Aussparungen.

In das Aluminium-Strangprofil 12 ist ein Klemmprofil 14 aus elastomerem Material, Gummi bzw. Kunststoff, eingeknöpft; dieses Klemmprofil 14 hat ebenfalls U-Form, weist also zwei Schenkel und einen Übergangsbereich auf. Die Innenflächen der Schenkel des Klemmprofils 14 sind mit nach innen ragenden Haltelippen 14a versehen.

Die Übergangskanten zwischen den Schenkeln und dem Übergangsbereich des Klemmprofils 14 weisen Einschnitte 14d auf, so daß an diesen Stellen "Soll-Knickstellen" entstehen.

Die gemäß der Darstellung in der Figur linke, obere Kante des Aluminium-Strangprofils 12 weist eine Aussparung 13 auf, deren Mündung einen etwas kleineren Durchmesser als die eigentliche Aussparung 13 hat. In dieser Aussparung ist der etwa keilförmige Befestigungsfuß 16a einer Dichtlippe 16 aus elastomerem Material, Gummi bzw. Kunststoff, aufgenommen. An das keilförmige Ende des Befestigungsfußes 16a schließt sich ein schmalerer Bereich an, dessen
Abmessungen etwas kleiner als die Innenabmessungen der
Mündung der Aussparung 13 sind, so daß der Befestigungsfuß 16a insgesamt etwa Pfeilform hat. Der Teil des Befestigungsfußes 16a, der sich im Bereich der Mündung
befindet, ist mit einem Hohlraum 17 versehen, so daß der
Verformungswiderstand des Befestigungsfußes 16a relativ
gering ist.

Die Anlagekante der Dichtlippe 16 weist die übliche Beflockung 18 auf.

Die drei Teile dieser Abdichtvorrichtung 10, nämlich das
Aluminium-Strangprofil 12, das Klemmprofil 14 aus elastomerem Material und die Dichtlippe 16 aus elastomerem
Material werden in der üblichen Weise als kontinuierliche
Profile beliebiger Länge hergestellt und dann auf die
gewünschten Abmessungen zerschnitten. Anschließend wird
das Klemmprofil 14 in das Aluminium-Strangprofil 12 eingeknöpft, indem das Klemmprofil 14 zusammengedrückt und
durch die Mündung des Aluminium-Strangprofils 12 eingeschoben wird. Diese Verformung des Klemmprofils 14 wird
durch die Einschnitte 14d erleichtert.

Nach dieser Montage des Klemmprofils 14 werden die unteren
Enden/seiner Schenkel 14 b, 14 c in den Aussparungen am unteren Ende
der Schenkel 12a, 12b des Aluminium-Strangprofils 12 aufgenommen, so daß das Klemmprofil 14 form- und kraftschlüssig in dem Aluminium-Strangprofil 12 gehalten ist.

Außerdem wird der Befestigungsfuß 16a zur Dichtlippe 16
in die Aussparung 13 eingeführt, indem der Befestigungsfuß 16a zusammengedrückt und durch die Mündung der Aussparung 13 eingeschoben wird. In der Aussparung 13 nimmt der Befestigungsfuß 16a wieder seine dargestellte Pfeilform an, so daß er ebenfalls form- und kraftschlüssig in der Aussparung 13 des Aluminium-Strangprofils 12 gehalten ist.

Nun wird die Abdichtvorrichtung 10 auf den entsprechenden Karosserieteil des Kraftfahrzeugs (nicht dargestellt) montiert, indem das Aluminium-Strangprofil auf die Kante des Karosserieteils aufgesetzt wird. Das Karosserieteil befindet sich also im Innern des Klemmprofils 14, wobei seine Haltelippen 14a die erforderliche Haltekraft erzeugen.

Nach der Montage der Fensterscheibe des Kraftfahrzeugs (nicht dargestellt) liegt die Beflockung 18 der Dichtlippe 16 an der Fensterscheibe an.

METZELER KAUTSCHUK GMBH

München                                    MK 335 P 84 EP

Patentansprüche

1. Vorrichtung zum Abdichten des Fensterschachtes eines Kraftfahrzeuges
   a) mit einem auf den entsprechenden Karosserieteil des Kraftfahrzeuges aufklemmbaren Befestigungsbereich, und
   b) mit einer an der Fensterscheibe anliegenden Dichtlippe aus elastomerem Material,

   d a d u r c h   g e k e n n z e i c h n e t, daß
   c) der Befestigungsbereich ein U-förmiges Metallprofil (12) aufweist,
   d) in dem ein U-förmiges Klemmprofil (14) aus elastomerem Material angeordnet ist, und daß
   e) die Dichtlippe (16) form- und/oder kraftschlüssig an dem Metallprofil (12) befestigt ist.

2. Vorrichtung nach Anspruch 1, dadurch gekennzeichnet, daß das U-förmige Klemmprofil (14) an den Innenflächen seiner beiden Schenkel mit Haltelippen (14a) versehen ist.

3. Vorrichtung nach einem der Ansprüche 1 oder 2, dadurch gekennzeichnet, daß das Klemmprofil (14) an seinen inneren Ecken mit Einschnitten (14d) versehen ist.

4. Vorrichtung nach einem der Ansprüche 1 bis 3, dadurch gekennzeichnet, daß das Klemmprofil (14) form- und/oder kraftschlüssig in dem Metallprofil (12) gehalten ist.

5. Vorrichtung nach einem der Ansprüche 1 bis 4, dadurch gekennzeichnet, daß das Metallprofil durch ein Aluminium-strangprofil (12) gebildet ist.

6. Vorrichtung nach einem der Ansprüche 1 bis 5, dadurch gekennzeichnet, daß das Metallprofil (12) eine Aussparung (13) aufweist, in der ein Befestigungsfuß (16a) der Dichtlippe (16) formschlüssig aufgenommen ist.

7. Vorrichtung nach einem der Ansprüche 1 bis 6, dadurch gekennzeichnet, daß die Anlagefläche der Dichtlippe (16) mit einer Beflockung versehen ist.